(19) Europäisches Patentamt

European Patent Office

Office européen des brevets

(11) EP 0 577 255 B1

(12) EUROPEAN PATENT SPECIFICATION

(45) Date of publication and mention
of the grant of the patent:
26.11.1997 Bulletin 1997/48

(51) Int Cl.6: C08L 23/02, C08L 23/16

(21) Application number: 93303703.8

(22) Date of filing: 13.05.1993

(54) **Elastomer composition for covering materials and covering materials for industrial parts comprising the same**

Elastomere Zusammensetzung für Beschichtungsmaterial und diese Zusammensetzung enthaltende Beschichtungsmaterialen für industriellen Gegenstände

Compostion élastomère pour matériau de revêtement et matériau de revêtement pour objets industriels, contenant cette composition

(84) Designated Contracting States:
DE FR GB

(30) Priority: 18.06.1992 JP 159275/92

(43) Date of publication of application:
05.01.1994 Bulletin 1994/01

(73) Proprietor: SUMITOMO CHEMICAL COMPANY, LIMITED
Chuo-ku Osaka 541 (JP)

(72) Inventors:
• Hosoda, Satoru
  Ichihara-shi, Chiba 290 (JP)
• Hikasa, Tadashi
  Sodegaura-shi, Chiba 299-02 (JP)
• Hamanaka, Tatsuo
  Ichihara-shi, Chiba 299-01 (JP)
• Kasahara, Tatsuya
  Ichihara-shi, Chiba 299-01 (JP)
• Asada, Yasushi
  Ichihara-shi, Chiba 299-01 (JP)

(74) Representative: Cresswell, Thomas Anthony
J.A. Kemp & Co.
14 South Square
Gray's Inn
London WC1R 5LX (GB)

(56) References cited:
EP-A- 0 052 469          EP-A- 0 298 739
US-A- 4 912 148

**Description**

The present invention relates to elastomer compositions, used as covering materials, excellent in light resistance and moldability. More particularly, it relates to olefinic thermoplastic elastomer compositions, used as covering materials, which are excellent in light resistance and moldability and are able to substitute for flexible polyvinyl chloride.

Use of thermoplastic elastomers is being developed in a wide variety of fields of industrial parts such as automobile parts, appliance parts and sundries taking advantage of the characteristics that they require no vulcanizing step and are processable by molding machines for thermoplastic resins. Among them, olefinic thermoplastic elastomer compositions are known (Japanese Patent Kokai No.48-26838).

Hitherto, high-graded shaped articles of thermoplastic resins are known, which are enhanced in appearance and softness by laminating covering materials on the surfaces of the shaped articles. The covering materials are flexible polyvinyl chloride and olefinic thermoplastic elastomers backed with foamed layers such as of polyolefin, polyurethane resin or the like in order to impart cushioning properties.

However, polyvinyl chloride covering materials are high in specific gravity and inferior in light resistance. Surface appearance is greatly deteriorated when the materials are directly exposed to sunlight. Furthermore, a problem is encountered in that, for instance, windshields of automobiles cloud when interior trims are made of such polyvinyl chloride covering materials, since the covering materials contain a large amount of plasticizers for providing flexibility. Moreover, there are problems that thermal disposal of wastes is impossible from a view point of environmental health, since polyvinyl chloride when burned generates hydrochloric acid gas. Furthermore, processing apparatuses are corroded.

Further improvement has been desired for appearance (whitening) of conventional olefinic thermoplastic elastomers, since they are hardly applied to the uses which require a superior light resistance, though the above problems encountered for polyvinyl chloride are partly solved.

When polyvinyl chloride is used as covering materials, they are generally embossed on their surfaces to give an impression of leather. Conventional olefinic thermoplastic elastomers cannot be embossed as easily as polyvinyl chloride. Further improvement has been desired in this respect.

US-A-4912148 describes a thermoplastic elastomer composition which comprises: (A) a monoolefin copolymer rubber; (B) crystalline poly-alpha olefin resin; (C) mineral oil; (D) polyolefin-type wax; and (E) butyl rubber. The polyolefin wax is stated to increase the compatibility of the olefin copolymer rubber with the crystalline polyolefin resin blend to give good surface brilliance of the final product and improved melt flow and mould release properties. The butyl rubber is required to improve the appearance of the final product and the compatibility of the basic composition. There is no suggestion that the polyolefin-type wax (D) could be replaced by crystalline paraffin and no suggestion that the butyl rubber could be omitted from the composition.

An object of the present invention is to solve the problems encountered in the conventional techniques, and to provide an olefinic elastomer composition suitable for use as covering materials which require an excellent light resistance and which is superior in moldability and appearance. Another object of the present invention is to provide covering materials for industrial parts which comprise said composition.

After intensive research, the inventors have found that, for example, ethylene-propylene copolymer rubber and/ or ethylene-butene-1 copolymer rubber used as olefinic copolymer rubbers to which a crystalline paraffin is added provide a thermoplastic elastomer composition much superior in light resistance and in moldability to conventional elastomer compositions. They have further found that covering materials comprising said composition are suitable for covering materials of industrial parts which require an excellent light resistance.

Accordingly, the present invention provides an elastomer composition for covering materials excellent in light resistance and moldability, which comprises a partially crosslinked mixture consisting of (A) 100 parts by weight of an olefinic copolymer rubber having a 100°C Mooney viscosity ($ML_{1+4}$ 100°C) of 30 to 350, (B) 5 to 150 parts by weight of an olefinic polymer, (C) 2 to 40 parts by weight of a crystalline paraffin having a melting point of 50°C or higher and a density of 0.90 g/cm$^3$ or higher (25°C) and (D) 0 to 150 parts by weight of a mineral oil, and said (B), (C) and (D) being based on 100 parts by weight of the olefinic copolymer rubber (A).

The present invention further provides an elastomer composition for covering materials excellent in light resistance and moldability, which comprises a partially crosslinked mixture consisting of (E) an oil-extended olefinic copolymer rubber, (B) 5 to 150 parts by weight of an olefinic polymer and (C) 2 to 40 parts by weight of a crystalline paraffin having a melting point of 50°C or higher and a density of 0.90 g/cm$^3$ or higher (25°C), said (E) comprising 150 parts by weight or less of a mineral oil (D) and 100 parts by weight of an olefinic copolymer rubber (A) having a 100°C Mooney viscosity ($ML_{1+4}$ 100°C) of 30 to 350, and said (B) and (C) being based on 100 parts by weight of the olefinic copolymer rubber (A).

The present invention further provides a covering material for industrial parts which comprises an elastomer composition of the invention.

The present invention is explained in detail below.

Preferably the olefinic copolymer rubber (A) is at least one rubber selected from ethylene-propylene copolymer rubbers and ethylene-butene-1 copolymer rubbers.

Preferably, the ethylene-propylene copolymer is ethylene-propylene-dicyclopentadiene and/or ethylidenenorbornene copolymer rubber (EPDM) which has a propylene content of 10-55% by weight, preferably 20-40% by weight, and a dicyclopentadiene and/or ethylidenenorbornene content of 1-30% by weight, preferably 3-20% by weight, as the third component.

Preferably, the ethylene-butene-1 copolymer is ethylene-butene-l-dicyclopentadiene and/or ethylidenenorbornene copolymer rubber which has a butene-1 content of 10-55% by weight, preferably 20-40% by weight, and a dicyclopentadiene and/or ethylidenenorbornene content of 1-30% by weight, preferably 3-20% by weight, as the third component.

The 100°C Mooney viscosity ($ML_{1+4}$ 100°C) of the copolymer rubber, when used in the form of the oil-extended ethylene copolymer rubber (E) referred to hereinafter, is preferably 80-350, more preferably 120-350, further preferably 140-300. The viscosity of the copolymer rubber, when this is not used in the form of the oil-extended ethylene copolymer, is preferably 30-150, more preferably 40-120, further preferably 50-100.

If the propylene or butene-1 content is smaller than 10% by weight, flexibility tends to be lost and if it is larger than 55% by weight, mechanical properties tend to deteriorate. If the content of the third component is smaller than 1% by weight, mechanical properties tend to deteriorate and if it is larger than 30% by weight, injection moldability tends to deteriorate. If the 100°C Mooney viscosity ($ML_{1+4}$ 100°C) is lower than 30, mechanical properties are lost and if it is higher than 350, appearance of molded articles is damaged.

Preferably, the olefinic polymer (B) is polypropylene or a propylene-$\alpha$-olefin copolymer resin.

Typically, the $\alpha$-olefin has two or more carbon atoms. Examples of the $\alpha$-olefin having two or more carbon atoms are ethylene, 1-butene, 1-pentene, 3-methyl-1-butene, 1-hexene, 1-decene, 3-methyl-1-pentene, 4-methyl-1-pentene and 1-octene. Melt flow rate of these polymers is preferably in the range of 0.1-100 g/10 min, more preferably in the range of 0.5-50 g/10 min. If the melt flow rate is lower than 0.1 g/10 min or higher than 100 g/10 min, the polymers have difficulty in processability.

The crystalline paraffins (C) used in the present invention include, for example, crystalline paraffin wax obtained by purification of distillate oil produced by vacuum distillation of petroleum oil, microcrystalline wax separated from distillate residue oil, Fischer-Tropsch wax synthesized from coal gas by Fischer-Tropsch process and wax having a molecular weight of smaller than 1500 obtained by thermal decomposition of polyolefins. The crystalline paraffin (C) has a melting point (the lowest one when a plurality of the melting points are present) of 50°C or higher, preferably 60-100°C. Furthermore, it has a density of 0.90 g/cm$^3$ or higher (25°C), preferably 0.91 g/cm$^3$ or higher. If the crystalline paraffin has a melting point of lower than 50°C and a density of lower than 0.90 g/cm$^3$, it is insufficient in the effect to improve light resistance.

The mineral oil (D) used in the present invention is generally a petroleum fraction of high boiling point. It is useful for improving processability and mechanical properties. Examples include paraffinic, naphthenic and aromatic petroleum fractions and the paraffinic ones are preferred. When aromatic components increase, contamination occurs and light resistance decreases.

The oil-extended olefinic copolymer rubbers (E) used in the present invention comprise the mineral oil (D) in an amount of 150 parts by weight or less, preferably 20-150 parts by weight, more preferably 30-120 parts by weight every 100 parts by weight of the copolymer rubber (A). When 100°C Mooney viscosity ($ML_{1+4}$ 100°C) of the copolymer rubber (A) is relatively high, flowability of the resulting elastomer composition is low and extrusion processability and injection moldability are damaged if the mineral oil is not contained. On the other hand, if content of the mineral oil is larger than 150 parts by weight, plasticity much increases to cause deterioration of processability and besides, performances of the molded articles such as properties are deteriorated. The 100°C Mooney viscosity ($ML_{1+4}$ 100°C) of the oil-extended olefinic copolymer rubber (E) is preferably 30-150, more preferably 40-100. If it is lower than 30, mechanical characteristics are lost and if it is higher than 150, molding becomes difficult.

Properties of oil-extended olefinic copolymer rubbers (oil-extended EPDM) and process for preparing them are explained taking EPDM as an example.

Incorporation of a large amount of the mineral oil into EPDM having a relatively high $ML_{1+4}$ 100°C of 80-350 gives olefinic elastomer compositions which satisfy simultaneously improvement of processability and mechanical properties due to ensuring flexibility and increasing flowability.

In general, mineral oil is added to an olefinic elastomer composition as flowability improver. According to the research conducted by the inventors, addition of 40 parts by weight or more of the mineral oil to 100 parts by weight of EPDM brings readily about bleeding of the mineral oil on the surface of the elastomer composition, resulting in a stain and tackiness, when no oil-extended EPDM is used.

However, the use of an oil-extended EPDM in which 150 parts by weight or smaller of the mineral oil has been incorporated into 100 parts by weight of EPDM having an $ML_{1+4}$ 100°C of, for example, 80-350 gives elastomer compositions having little bleeding of the mineral oil, neither stain nor tackiness and excellent properties in breaking strength, breaking extension and compression set. No bleeding of the mineral oil in spite of a large amount of the mineral oil is considered due to a raise in the upper limit of allowable oil-extension amount of the mineral oil on the

EP 0 577 255 B1

basis of EPDM of relatively high Mooney viscosity and uniform dispersion of the mineral oil which has been previously and properly added to EPDM.

Oil extension of EPDM is performed by known methods. For example, EPDM and the mineral oil are mechanically kneaded in apparatuses such as rolls and Banbury mixers. Another method is adding a given amount of the mineral oil to an EPDM solution and thereafter removing the solvent by steam stripping or the like. Preferred is to use an EPDM solution obtained by polymerization, from a view point of operation.

In the present invention, blending ratio of the components in the mixture of copolymer rubber (A), olefinic polymer (B), crystalline paraffin (C) and mineral oil (D) or the mixture of oil-extended olefinic copolymer rubber (E), olefinic polymer (B) and crystalline paraffin (C) is as follows.

In the former case, the amount of the component (B) is 5-150 parts by weight, that of the component (C) is 2-40 parts by weight and that of the component (D) is 0-150 parts by weight all every 100 parts by weight of the component (A).

In the latter case, the amount of the component (E) contains 100 parts by weight of the component (A) and 150 parts by weight or smaller of the component (D) based on 100 parts by weight of the component (A). And the amount of the component (B) is 5-150 parts by weight and that of the component (C) is 2-40 parts by weight every 100 parts by weight of the component (A).

In these mixtures, if the amount of the component (B) of olefinic polymer is less than 5 parts by weight, flowability decreases to result in bad appearance of molded articles. If it is greater than 150 parts by weight, flexibility degrades.

If the amount of the crystalline paraffin (C) is less than 2 parts by weight, the effect to improve light resistance is low and if it is greater than 40 parts by weight, flexibility of molded articles deteriorates.

Partial crosslinking of the mixture comprising the component (A), component (B), component (C) and component (D) or the mixture comprising the component (E), component (B) and component (C) is suitably carried out in the presence of organic peroxide crosslinking agents. The organic peroxides include, for example, 2,5-dimethyl-2,5-di(t-butyl-peroxy)hexane, 2,5-dimethyl-2,5-di(t-butylperoxy)-hexyne-3, 1,3-bis(t-butylperoxyisopropyl)benzene, 1,1-di(t-butylperoxy)-3,5,5-trimethylcyclohexane, 2,5-dimethyl-2,5-di(peroxybenzoyl)hexyne-3 and dicumyl peroxide. Among them, preferred is 2,5-dimethyl-2,5-di-(t-butylperoxy)hexane in smell and scorching.

The addition amount of the organic peroxide is in the range of 0.01-2.0 parts by weight based on 100 parts by weight in total of the copolymer rubber (A) and the olefinic polymer (B). If it is smaller than 0.01 part by weight, the effect of crosslinking reaction is small and if it is greater than 2.0 parts by weight, control of the reaction is hard and besides, such amount is not economical.

Partial crosslinking with organic peroxides may be effected in the presence of crosslinking aids. They are, for example, functional compounds such as N,N'-m-phenylenebismaleimide, toluylenebismaleimide, p-quinone dioxime, nitrobenzene, diphenylguanidine, trimethylolpropane, divinylbenzene, ethylene glycol dimethacrylate, polyethylene glycol dimethacrylate, trimethylolpropane trimethacrylate and allyl methacrylate. Addition of such compound serves for a homogeneous and gentle crosslinking reaction and a reaction between the copolymer rubber and the olefinic polymer, resulting in an improvement in mechanical properties.

The addition amount of the crosslinking aids is in the range of 0.01-4.0 parts by weight, preferably 0.05-2.0 parts by weight every 100 parts by weight in all of the copolymer rubber (A) and olefinic polymer (B). If it is smaller than 0.01 part by weight, the effect is not expected and if it exceeds 4 parts by weight, this is not economical.

One of the methods for preparing the elastomer composition by partially crosslinking the above-mentioned mixtures according to the present invention is explained below.

Copolymer rubber (A), olefinic polymer (B), crystalline paraffin (C), mineral oil (D) and organic peroxides and optionally, crosslinking aids and others are mixed at given ratios and subjected to a dynamic heat treatment. That is, the mixture is molten and kneaded. Non-open type Banbury mixers, twin-screw extruders and the like are used as mixing and kneading apparatuses. Kneading temperature is usually within the range of 150-300°C and kneading time is usually within the range of 1-30 minutes. If necessary, there may be further added auxiliary materials such as inorganic fillers, antioxidants, weather-resistant agents, antistatic agents and coloring pigments.

When the copolymer rubber (A) has a relatively high Mooney viscosity, a preferred method comprises previously preparing oil-extended olefinic copolymer rubber (E) by blending copolymer rubber (A) and mineral oil (D). Then the oil-extended olefinic copolymer rubber (E), olefinic polymer (B) and crystalline paraffin (C) and, if necessary, additionally cross-linking aids and the auxiliary materials are blended at given ratios at a temperature within the range of 150-250°C in, for example, a non-open type Banbury mixer, until sufficient kneading and homogenizing are attained. The resulting composition is further blended with organic peroxides in enclosed mixers such as tumblers, super mixers or the like and then the resulting blend is subjected to a dynamic heat treatment at a temperature within the range of 200-300°C in twin-screw continuous extruders which provide a strong kneading force.

The auxiliary materials are added at any stages of preparation of the composition, at the time of processing or at the time of use of the product after processed.

The methods for molding the resulting elastomer composition to prepare covering materials for industrial parts are

4

as follows.

①Molding the elastomer composition into a sheet (if necessary, multi-layer with a polyolefin foamed sheet) by a T-die sheet-forming machine and subjecting the sheet to vacuum forming.

②Simultaneous molding of the sheet of ① with a polystock or a fiber-reinforced plastic.

③Stamping molding of the sheet of ① with a plastic (if desired, a plastic containing inorganic fillers).

④Multilayer extrusion molding of the elastomer composition as a covering layer.

⑤Two-layer injection molding or insert molding of the elastomer composition as a covering layer.

The covering material of the present invention is used for industrial parts. Typically, the industrial parts are automobile parts. The automobile parts are, for example, internal covering materials such as instrument panels, console boxes, arm rests, head rests, door trims, rear panels, pillar trims, sunvisors, trunk room trims, trunk lid trims, air bag containers, seat buckles, head liners, glove boxes, steerinq wheel covers and ceiling materials. Preferably, the automobile parts are instrument panels or door trims.

Other possible industrial parts are given below.

Appliance parts and office appliance parts:

covering materials of housings such as television, video decks, washing machines, driers, cleaners, coolers, air conditioners, remote controller cases, radar ranges, toasters, coffee makers, pots, jars, dinnerware washing machines, electric shavers, hair driers, microphones, headphones, beauty culture machines, CD cassette containers, personal computers, typewriters, projectors, telephone sets, copying machines, facsimile telegraphs, and telex devices.

Sports goods: covering materials for sports shoes decorative parts, grips of rackets and sports devices and goods for various ball games and saddles of bicycles, motor bicycles and tricycles.

Building parts and housing parts: covering materials for furnitures, desks and chairs, covering materials for gates, doors and fences, covering materials for wall decorative materials, ceiling decorative materials and curtain walls, interior floorings for kitchens, lavatories, bathrooms, exterior floorings for veranda, terrace, balcony and car port, and cloths such as entrance mats, table cloths, coasters and ashtray cloths.

Other industrial parts: grips and hoses of electric tools and covering materials thereof and packing materials.

In addition, covering materials for bags, cases, files, pocket note books, albums, stationaries, camera bodies and toys such as dolls and outer frames of framed pictures and covering materials thereof.

The present invention will be explained in more detail by the following nonlimiting examples.

The following tests were effected for measurement of properties in the examples and comparative examples.

(1) Mooney viscosity ($ML_{1+4}$ 100°C): ASTM D-927-57T; the following formula was applied to EPDM.

$$\log (ML_1/ML_2) = 0.0066 \ (\Delta \ PHR)$$

$ML_1$ : Mooney viscosity of EPDM.

$ML_2$ : Mooney viscosity of oil-extended EPDM.

$\Delta$ PHR: Oil-extension amount per 100 parts by weight of EPDM

(2) Evaluation of light resistance: The sample was irradiated with ultraviolet ray using UV fadeometer (UV-Long Life Fadeometer manufactured by Suga Test Machine Co.) for 500 hours at 83°C under water-free condition. After irradiation, change in color of the surface of the sample was visually observed and in addition, the degree of whitening W (Lab) was measured by a differential colorimeter (SM color computer manufactured by Suga Test Machine Co.) (measuring pore 12 mm$\phi$). The smaller value of the degree of whitening means the smaller whitening and is better.

Example 1

To a solution of 5% by weight of EPDM-1 [ENB (ethylidenenorbornene), iodine value=8, propylene=32% by weight, and $ML_{1+4}$ 100°C=242] in hexane was added a mineral oil (100 parts by weight, Diana Pocess Oil PW-380 manufactured by Idemitsu Kosan Co.) based on 100 parts by weight of the EPDM-1, and then the solution was subjected to steam stripping to remove the solvent to prepare oil-extended EPDM-1 ($ML_{1+4}$ 100°C =53). The oil-extended EPDM-1 (70 parts by weight), polypropylene-1 (30 parts by weight, MFR=1.3 g/10 min, ethylene=4.5% by weight, random type), crystalline paraffin-1 (8 parts by weight, Hi-Mic-2095 manufactured by Nihon Seiro Co., a melting point: 80°C, density:0.935 g/cm$^3$, molecular weight: 700), N,N'-m-phenylene-bismaleimide(0.4 part by weight, Sumifine BM manufactured by Sumitomo Chemical Co., Ltd.) as a crosslinking aid, Sumisove 300 (0.3 part by weight, manufactured by Sumitomo Chemical Co., Ltd.) as a light stabilizer and Irganox 1010 (0.2 part by weight, manufactured by Ciba-Geigy Corp.) as a heat stabilizer were kneaded in a Banbury mixer at 170-200°C for 7 minutes and extruded to prepare a pellet-like master batch.

Then, 2,5-dimethyl-2,5-di(t-butylperoxy)hexane (hereinafter referred to as "organic peroxide"), 0.04 part by weight based on 100 parts by weight of the master batch, was intimately blended with the master batch in a Henschel mixer.

The resulting blend was subjected to a dynamic heat treatment at 240-260°C for about 30 seconds in a twin-screw kneading extruder (TEX-44HC manufactured by Nippon Seikosho Co.) to obtain a partially crosslinked thermoplastic elastomer pellets.

The resulting pellets were extruded by a T-die sheet-forming machine and passed between embossed roll and rubber roll to obtain a thermoplastic elastomer sheet of 1 mm thick having an embossed pattern on the surface.

On the surface of the resulting thermoplastic elastomer sheet was coated Hicope U L-4001 (manufactured by Tokushu Shikiryo Kogyo Co.) as an undercoating agent for a surface treatment of the sheet at a thickness of 1-3 $\mu$ m and the sheet was dried at 70°C for 5 minutes. On the undercoat was further coated an urethane elastomer top coating agent Hicope V EU-684 (manufactured by Tokushu Shikiryo Kogyo Co.) and the sheet was dried to obtain a topcoat layer of 2-5 $\mu$ m thick. On the back side of the sheet was coated Joitack AD-471B (manufactured by Tokushu Shikiryo Kogyo Co.) as an adhesive to urethane and the coated sheet was dried.

The coated sheet was subjected to drape forming with a vacuum forming machine (TF-1-16-VP manufactured by Nakakura Kihan Co., mold: instrument panel model) so that the back side of the sheet was brought into contact with the mold until a vacuum-formed covering material was prepared.

A semirigid urethane foam of 0.16 g/cm$^3$ in density obtained by mixing and pouring isocyanate and polyol (1:2) manufactured by Sumitomo Bayer Urethane Co. was laminated on the back side of this covering material.

A test specimen (7.5 cm $\times$ 7.5 cm) was cut out from the resulting laminate and evaluated on light resistance after irradiation was made with ultraviolet rays for 500 hours (ultraviolet fadeometer FAL-SH manufactured by Suga Test Machine Co., black panel temperature 83°C).

Thickness of the covering material layer was 0.83 mm.

Example 2

Example 1 was repeated except that oil-extended EPDM-2 (70 parts by weight, $ML_{1+4}$ 100°C=78) mentioned below was used in place of the oil-extended EPDM-1 and the crosslinking aid (0.2 part by weight in place of 0.4 part by weight, Sumifine BM manufactured by Sumitomo Chemical Co., Ltd.) was used. The oil-extended EPDM-2 was prepared by adding a mineral oil (40 parts by weight based on 100 parts by weight of EPDM-2, Diana Pocess Oil PW-380 manufactured by Idemitsu Kosan Co.) to a solution of 5% by weight of EPDM-2 (ENB, iodine value=10, propylene=30% by weight, and $ML_{1+4}$ 100°C=143) in hexane and then subjecting the solution to steam stripping to remove the solvent.

Example 3

Example 2 was repeated except that polypropylene-2 (30 parts by weight, MFR=2.2 g/10 min, homopolymer type) was used in place of the polypropylene-1, and crystalline paraffin-2 (12 parts by weight, LUVAX 1151 manufactured by Nihon Seiro Co. having a melting point of 77°C, a density of 0.940 g/cm$^3$ and a molecular weight of 700) was used in place of the crystalline paraffin-1.

Example 4

Example 2 was repeated except that EPDM-3 (70 parts by weight, ENB, iodine value=8, propylene=50% by weight, $ML_{1+4}$ 100°C=86) was used in place of the oil-extended EPDM-2 and polypropylene-2 (30 parts by weight) was used in place of the polypropylene-1.

Example 5

Example 4 was repeated except that EPDM-4 (ENB, iodine value=18, propylene=27% by weight, $ML_{1+4}$ 100°C=90) was used in place of the EPDM-3.

Example 6

Example 4 was repeated except that EPDM-5 [DCPD (dicyclopentadiene), iodine value=10, propylene= 49% by weight, $ML_{1+4}$ 100°C=43] was used in place of the EPDM-3.

Comparative Example 1

Example 1 was repeated except that the crystalline paraffin-1 was not used.
Results of evaluation of light resistance in Examples 1-6 and Comparative Example 1 are shown in Table 1.

Table 1

|  | Example | | | | | | Comparative example |
|---|---|---|---|---|---|---|---|
|  | 1 | 2 | 3 | 4 | 5 | 6 | 1 |
| Whitening (visual evaluation) | ○ | ○ | ○ | ○ | ○ | ○ | X |
| Whitening degree (differential colorimeter) | 14 | 12 | 10 | 11 | 12 | 14 | 39 |
| Embossing of molded articles | Good | Good | Good | Good | Good | Good | Bad |

Whitening (visual evaluation):○ : Substantially no change occurred by irradiation.
Δ : The surface somewhat whitened by irradiation.
X : The surface seriously whitened by irradiation.
Embossing of molded article: "Good": Embossed patterns distinctly remained on the molded sheet.
"Bad": Valleys of embossed patterns were dull and embossed patterns were generally indistinct.

Example 7

A thermoplastic elastomer sheet of 0.8 mm thick was prepared from the thermoplastic elastomer pellets obtained in Example 1 using a T-die sheet-forming machine. At this time, a polypropylene foamed sheet was heat laminated on the elastomer sheet to obtain a laminate sheet.
On the surface of this laminate sheet were coated the same undercoating agent and topcoating agent as used on the surface of the sheet in Example 1 to obtain a laminated sheet for molding.
A core-box laminate having the resulting sheet as a covering material on polypropylene (homopolypropylene, MFR=30 g/10 min) was prepared by a stamping molding machine (resin feeding unit: manufactured by Sato Tekkosho Co. and press unit: manufactured by Kawasaki Yuko Co., clamping force=500 ton).
A test specimen was cut out from the resulting laminate in the same manner as in Example 1 and subjected to the light resistance test for 500 hours.

Comparative Example 2

The thermoplastic elastomer obtained in Comparative Example 1 was subjected to the same evaluation on light resistance as in Example 7.
The results of evaluation on light resistance in Example 7 and Comparative Example 2 are shown in Table 2.

Table 2

|  | Example | Comparative example |
|---|---|---|
|  | 7 | 2 |
| Whitening (visual evaluation) | ○ | X |
| Whitening degree (differential colorimeter) | 11 | 42 |
| Embossing of molded articles | Good | Bad |

As explained above, the present invention provides an olefinic elastomer composition suitable for use as covering materials which require an excellent light resistance and an excellent moldability and further provides covering materials for industrial parts prepared from said composition.

**Claims**

1. An elastomer composition for covering materials excellent in light resistance and moldability, which comprises a partially crosslinked mixture consisting of (A) 100 parts by weight of an olefinic copolymer rubber having a 100°C

Mooney viscosity (ML$_{1+4}$) 100°C) of 30 to 350, (B) 5 to 150 parts by weight of an olefinic polymer, (C) 2 to 40 parts by weight of a crystalline paraffin having a melting point of 50°C or higher and a density of 0.90 g/cm$^3$ or higher (25°C) and (D) 0 to 150 parts by weight of a mineral oil, and said (B), (C) and (D) being based on 100 parts by weight of the olefinic copolymer rubber (A).

2. An elastomer composition for covering materials excellent in light resistance and moldability, which comprises a partially crosslinked mixture consisting of (E) an oil-extended olefinic copolymer rubber, (B) 5 to 150 parts by weight of an olefinic polymer and (C) 2 to 40 parts by weight of a crystalline paraffin having a melting point of 50°C or higher and a density of 0.90 g/cm$^3$ or higher (25°C), said (E) comprising 150 parts by weight or less of a mineral oil (D) and 100 parts by weight of an olefinic copolymer rubber (A) having a 100°C Mooney viscosity (ML$_{1+4}$100°C) of 30 to 350, and said (B) and (C) being based on 100 parts by weight of the olefinic copolymer rubber (A).

3. An elastomer composition according to claim 1 or 2, wherein the olefinic copolymer rubber (A) is at least one rubber selected from ethylene-propylene copolymer rubbers and ethylene-butene-1 copolymer rubbers.

4. An elastomer composition according to claim 3, wherein the ethylene-propylene copolymer is ethylene-propylene-dicyclopentadiene and/or ethylidenenorbornene copolymer rubber which has a propylene content of 10 to 55% by weight and a dicyclopentadiene and/or ethylidenenorbornene content of 1 to 30% by weight as the third component.

5. An elastomer composition according to claim 3, wherein the ethylene-butene-1 copolymer is ethylene-butene-1-dicyclopentadiene and/or ethylidenenorbornene copolymer rubber which has a butene-1 content of 10 to 55% by weight and a dicyclopentadiene and/or ethylidenenorbornene content of 1 to 30% by weight as the third component.

6. An elastomer composition according to any one of claims 1 to 5 wherein the olefinic polymer (B) is polypropylene or a propylene-α-olefin copolymer resin.

7. An elastomer composition according to any one of claims 1 to 5 wherein the crystalline paraffin (C) has a melting point of from 60 to 100°C and/or a density of 0.91 g/cm$^3$ or higher (25°C).

8. A covering material for industrial parts which comprises an elastomer composition according to any one of claims 1 to 7.

9. A covering material according to claim 8, wherein the industrial parts are automobile parts.

10. A covering material according to claim 9, wherein the automobile parts are instruments panels.

11. A covering material according to claim 9, wherein the automobile parts are door trims.

**Patentansprüche**

1. Elastomer-Zusammensetzung für das Bedecken von Materialien, die hinsichtlich Lichtbeständigkeit und Formbarkeit ausgezeichnet ist, umfassend eine teilweise vernetzte Mischung, die besteht aus (A) 100 Gewichtsteilen eines olefinischen Copolymer-Kautschuks mit einer Mooney-Viskosität bei 100°C (ML$_{1+4}$ 100°C) von 30 bis 350, (B) 5 bis 150 Gewichtsteilen eines olefinischen Polymers, (C) 2 bis 40 Gewichtsteilen eines kristallinen Paraffins mit einem Schmelzpunkt von 50°C oder höher und einer Dichte von 0,90 g/cm$^3$ oder höher (25°C) und (D) 0 bis 150 Gewichtsteilen eines Mineralöls, wobei (B), (C) und (D) auf 100 Gewichtsteile des olefinischen Copolymer-Kautschuks (A) bezogen sind.

2. Elastomer-Zusammensetzung für das Bedecken von Materialien, die hinsichtlich Lichtbeständigkeit und Formbarkeit ausgezeichnet ist, umfassend eine teilweise vernetzte Mischung, die besteht aus (E) einem Öl-gestreckten olefinischen Copolymer-Kautschuk, (B) 5 bis 150 Gewichtsteilen eines olefinischen Polymers und (C) 2 bis 40 Gewichtsteilen eines kristallinen Paraffins mit einem Schmelzpunkt von 50°C oder höher und einer Dichte von 0,90 g/cm$^3$ oder höher (25°C), wobei (E) 150 Gewichtsteile oder weniger eines Mineralöls (D) und 100 Gewichtsteile eines olefinischen Copolymer-Kautschuks (A) mit einer Mooney-Viskosität bei 100°C (ML$_{1+4}$ 100°C) von 30 bis 350 umfaßt und (B) und (C) auf 100 Gewichtsteile des olefinischen Copolymer-Kautschuks (A) bezogen sind.

3. Elastomer-Zusammensetzung nach Anspruch 1 oder 2, in welcher es sich bei dem olefinischen Copolymer-Kautschuk (A) um mindestens einen Kautschuk handelt, der aus Ethylen-Propylen-Copolymer-Kautschuken und Ethylen-Buten-1-Copolymer-Kautschuken ausgewählt ist.

4. Elastomer-Zusammensetzung nach Anspruch 3, in welcher das Ethylen-Propylen-Copolymer Ethylen-Propylen-Dicyclopentadien- und/oder -Ethyliden-norbornen-Copolymer-Kautschuk mit einem Propylen-Gehalt von 10 bis 55 Gewichts-% und einem Dicyclopentadien- und/oder Ethylidennorbornen-Gehalt von 1 bis 30 Gewichts-% als die dritte Komponente ist.

5. Elastomer-Zusammensetzung nach Anspruch 3, in welcher das Ethylen-Buten-1-Copolymer Ethylen-Buten-1-Dicyclopentadien- und/der -Ethylidennorbornen-Copolymer-Kautschuk mit einem Buten-1-Gehalt von 10 bis 55 Gewichts-% und einem Dicyclopentadien- und/der Ethylidennorbornen-Gehalt von 1 bis 30 Gewichts-% als die dritte Komponente ist.

6. Elastomer-Zusammensetzung nach irgendeinem der Ansprüche 1 bis 5, in welcher das olefinische Polymer (B) Polypropylen oder ein Propylen-$\alpha$-Olefin-Copolymer-Harz ist.

7. Elastomer-Zusammensetzung nach irgendeinem der Ansprüche 1 bis 5, in welcher das kristalline Paraffin (C) einen Schmelzpunkt von 60 bis 100°C und/oder eine Dichte von 0,91 g/cm$^3$ oder höher (25°C) aufweist.

8. Bedeckungsmaterial für industrielle Teile, umfassend eine Elastomer-Zusammensetzung nach irgendeinem der Ansprüche 1 bis 7.

9. Bedeckungsmaterial nach Anspruch 8, wobei die industriellen Teile Automobil-Teile sind.

10. Bedeckungsmaterial nach Anspruch 9, wobei die Automobil-Teile Armaturenbretter sind.

11. Bedeckungsmaterial nach Anspruch 9, wobei die Automobil-Teile Türverkleidungen sind.

**Revendications**

1. Composition élastomère destinée à revêtir des matériaux ayant une excellente capacité à être moulés et une excellente résistance à la lumière, qui comporte un mélange partiellement réticulé constitué de (A) 100 parties en poids d'un caoutchouc copolymère oléfinique ayant une viscosité Mooney à 100°C (ML$_{1+4}$ 100°C) de 30 à 350, (B) 5 à 150 parties en poids d'un polymère oléfinique, (C) 2 à 40 parties en poids d'une paraffine cristalline ayant un point de fusion de 50°C ou plus et une densité de 0,90 g/cm$^3$ ou plus (25°C) et (D) 0 à 150 parties en poids d'une huile minérale et lesdits (B). (C) et (D) étant basés sur 100 parties en poids du caoutchouc (A) de copolymère oléfinique.

2. Composition élastomère destinée à revêtir des matériaux ayant une excellente capacité à être moulés et une excellente résistance à la lumière, qui comporte un mélange partiellement réticulé constitué de (E) un caoutchouc copolymère oléfinique étendu à l'huile, (B) 5 à 150 parties en poids d'un polymère oléfinique et (C) 2 à 40 parties en poids d'une paraffine cristalline ayant un point de fusion de 50°C ou plus et une densité de 0,90 g/cm$^3$ ou plus (25°C), le composé (E) comprenant 150 parties en poids ou moins d'une huile (D) minérale et 100 parties en poids d'un caoutchouc (A) de copolymère oléfinique ayant une viscosité Mooney à 100°C (ML$_{1+4}$ 100°C) de 30 à 350, lesdits (B) et (C) étant basés sur 100 parties en poids du caoutchouc (A) de copolymère oléfinique

3. Composition élastomère suivant la revendication 1 ou 2, dans lequel le caoutchouc (A) de copolymère oléfinique est au moins un caoutchouc choisi parmi des caoutchoucs copolymères éthylène-propylène et des caoutchoucs copolymères éthylène-butène-1.

4. Composition élastomère suivant la revendication 3, dans lequel le copolymère propylène-éthylène est le caoutchouc copolymère éthylène-propylène-dicyclopentadiène et/ou éthylidenenorbornene qui a une teneur en propylène de 10 à 55 % en poids et une teneur en dicyclopentadiène et/ou éthylidenenorbornene de 1 à 30 % en poids au titre du troisième composant.

5. Composition élastomère suivant la revendication 3, dans lequel le copolymère éthylène-butène-1 est le caoutchouc

9

copolymère éthylène-butène-1-dicyclopentadiène et/ou éthylidenenorbornene qui a une teneur en butène-1 de 10 à 55 % en poids et une teneur en dicyclopentadiène et/ou éthylidenenorbornene de 1 à 30 % en poids au titre du troisième composant.

6. Composition élastomère suivant l'une quelconque des revendications 1 à 5, dans lequel le copolymère (B) oléfinique est le polypropylène ou une résine de copolymère propylène-$\alpha$-oléfine.

7. Composition élastomère suivant l'une quelconque des revendication 1 à 5, dans lequel la paraffine (C) cristalline a un point de fusion compris entre 60 et 100°C et/ou une densité de 0,91 g/cm$^3$ ou plus (25°C).

8. Matériau de revêtement pour des pièces industrielles qui comporte une composition élastomère suivant l'une quelconque des revendications 1 à 7.

9. Matériau de revêtement suivant la revendication 8, dans lequel les pièces industrielles sont des pièces automobiles.

10. Matériau de revêtement suivant la revendication 9, dans lequel les pièces automobiles sont des tableaux de bord.

11. Matériau de revêtement suivant la revendication 9, dans lequel les pièces automobiles sont des châssis de porte.